(19) Europäisches Patentamt European Patent Office Office européen des brevets

(11) **EP 3 168 203 B1**

(12) **EUROPEAN PATENT SPECIFICATION**

(45) Date of publication and mention of the grant of the patent:
**08.09.2021 Bulletin 2021/36**

(51) Int Cl.:
***C04B 28/00*** *(2006.01)* *C04B 111/00* *(2006.01)*

(21) Application number: **16198437.2**

(22) Date of filing: **11.11.2016**

(54) **PROCESS FOR FOR THE ADDITIVE PRODUCTION OF MANUFACTURED ITEMS USING A GEOPOLYMER BASED BINDER**

3D-VERFAHREN ZUR HERSTELLUNG VON ERZEUGNISSEN UNTER EINSATZ EINES GEOPOLYMER-BASIERTEN BINDEMITTELS

3D-PROCEDE POUR LA MANUFACTURE DES ARTICLES UTILISANT UN LIANT À BASE D'UN GÉOPOLYMÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.11.2015 IT UB20155482**

(43) Date of publication of application:
**17.05.2017 Bulletin 2017/20**

(73) Proprietor: **Desamanera S.r.l.**
**45100 Rovigo (RO) (IT)**

(72) Inventors:
• **COLOMBO, Paolo**
**35100 Padova (PD) (IT)**
• **CONTE, Alberto**
**35020 Terrassa Padovana (PD) (IT)**

• **DE MARZI, Anna**
**36071 Arzignano (VI) (IT)**
• **SCANFERLA, Paolo**
**30039 Stra (VE) (IT)**
• **ITALIANO, Antonino**
**45100 Rovigo (RO) (IT)**

(74) Representative: **Gallo, Luca**
**Gallo & Partners S.r.l.**
**Via Rezzonico, 6**
**35131 Padova (IT)**

(56) References cited:
EP-A1- 2 851 208 EP-A2- 1 475 220
WO-A2-2009/037550 DE-A1-102011 105 688
DE-A1-102014 003 103 US-A1- 2005 049 739
US-A1- 2005 059 757

**Description**

Field of application

The present invention regards a process for the additive production of manufactured items.

The process, object of the present invention, is inserted in the industrial field of additive production, in particular by means of 3D printing, of manufactured items preferably made of conglomerate and stone.

State of the art

As known, numerous processes for the additive production of manufactured items are currently available on the market, in particular by means of 3D printing machines.

More in detail, in recent years different processes have been implemented which allow the production by means of 3D printing of manufactured items made of conglomerate or stone.

Italian patent No. ITPI20050031, for example, describes a process for the additive production of manufactured conglomerate items which provides for the controlled depositing by means of computer, within an area delimited by containment walls, of layers of granular material alternated with layers of an organic binder. The latter is selectively sprayed on pre-selected zones of each layer of granular material in order to obtain the corresponding cross section of the final manufactured item. The organic binder used in such process is in particular an epoxy or polyurethane resin.

The main drawback of the above briefly-described lies in the use of organic binders, such as epoxy or polyurethane resins, obtained starting from raw materials which, in addition to being characterized by a high cost, have poor environmental compatibility.

A further process for the additive production of manufactured conglomerate items currently available on the market provides for the use of an inorganic air binder constituted by a specific magnesia cement, termed Sorel cement, and obtained from a first solid component in powder form with magnesic base, adapted to be dispersed in the granular material to form a mixture, and by a second liquid component, such as an aqueous magnesium chloride solution, adapted to be sprayed on the mixture in order to react with the first component and lead to the formation of a rigid matrix characterized by the presence of compounds in the $MgO\text{-}MgCl_2\text{-}H_2O$ system.

The air binder used in the latter process of known type, nevertheless, has poor strength with prolonged water contact, such that the contexts of use of the manufactured items made therewith are strongly limited. In addition, the presence of chlorides, brought by the binder, render the manufactured items made by means of the above-described process incompatible with the steel usable, for example, for reinforcing the structures.

A further drawback is given by the fact that the manufactured items obtained with the above-described binder have in practice shown to be provided with density and with mechanical and durability properties that are not completely satisfactory.

Finally, the hardening of the aforesaid air binder can only occur of the mixture is not in continuous contact with water, requiring that the above-described process is executed with greater precaution. DE 102014003103 A1 discloses as product a binder with geopolymer base which may be used in a 3D-printing process; however, the actual 3D-printing process is not described. The geopolymer is formed from an aluminosilicate activated by alkalis; at first, a pre-reacted material of a solid aluminosilicate and a liquid alkali component are prepared to initiate the reaction process to which later on, water is added in order to terminate the polymerization reaction.

US 2005/049739 A1 discloses a 3D-printing process wherein a reactive resin is selectively dispensed on a layer of non-reactive powder.

DE 102011105688 A1 discloses a 3D-printing process wherein an aqueous solution is selectively dispensed on a layer in which particles of filler and particles of alkali silicate are present.

Presentation of the invention

The problem underlying the present invention is therefore that of overcoming the drawbacks manifested by the abovementioned solutions of known type, by providing a process for the additive production of manufactured items, which allows making manufactured items provided with optical mechanical properties, hardness and strength properties even in contact with water.

Another object of the present invention is to provide a process for the additive production of manufactured items which can also be employed for making manufactured items adapted to remain in prolonged contact with the water or with the steel.

A further object of the present invention is to provide a process for the additive production of manufactured items which is simple and inexpensive to make and employ.

Brief description of the drawings

The technical characteristics of the invention, according to the aforesaid objects, can be clearly seen in the contents of the below-reported process claims and the advantages thereof will be more evident in the following detailed description, made with reference to the enclosed drawings, which represent a merely exemplifying and non-limiting embodiment of the invention, in which:

- Figure 1 shows a schematized front view of an apparatus for making manufactured items by means of an additive process according to the present invention, in accordance with a first embodiment;
- Figure 2 shows a schematized front view of an apparatus for making manufactured items by means of an additive process according to the present invention, in accordance with a second embodiment.

Detailed description

The process according to the present invention is intended to be advantageously employed for the additive production of manufactured items.

More in detail, the present process using a binder are adapted to be used for making manufactured items by means of 3D printing, in particular with a jetting technique, i.e. spraying (i.e. an indirect 3D printing technique), which provides that the manufactured items are made by spraying or simply depositing a binder in liquid form on a constantly renewed powder bed.

The binder used in the inventive process is adapted for the additive production of manufactured items in particular made of conglomerate and for such purpose is adapted to be distributed on a layer of inert granular material, in order to form a rigid matrix incorporating the granules of the latter.

With the expression "granular material" it is intended herein to indicate any incoherent material suitable for 3D printing by means of jetting technique and for such purpose having a grain size adapted for creating a renewable powder bed, lacking significant defects and susceptible of forming a cohesive material when sprayed with a binder in liquid or semi-liquid form. Such granular material can contain different-size powder material as well as, for example, material in the form of fibers, of platelets or with other form factors. The material can have inorganic nature (e.g. powders of different rocks) or contain organic parts, as will be better specified hereinbelow.

The binder is a substantially inorganic binder with geopolymer base.

With the expression "substantially inorganic" it is herein intended to indicate that the binder is constituted by inorganic compounds, and can comprise minimum quantities of organic compounds, which however do not exceed 30% by weight of the binder overall, without departing from the protective scope defined by the present patent.

In addition with the expression "with geopolymer base" it is intended to indicate that the binder is constituted for at least 70% by weight, and preferably for at least 90% by weight by geopolymer compounds.

The latter are materials obtained by means of a so-called geopolymerization reaction, i.e. polymerization via condensation, starting from a solid component in powder form, mainly comprising reactive aluminosilicates, but also phosphor or boron compounds, dissolved in a liquid component comprising an alkaline solution. The raw materials more commonly employed for the synthesis of geopolymers are kaolins or calcined clays or pozzolan, as well as discard materials from industrial processing, such as fly-ash from coal plants or muds from aluminum processing, or natural materials such as lava or volcanic ash. One or more of such raw materials are made to react in an alkaline solution, such as an aqueous solution containing hydroxides or alkaline silicates (e.g. sodium, potassium, cesium or rubidium).

Surprisingly, geopolymers have proven suitable for being employed as binders in the additive production of manufactured items, in particular by means of 3D printing and more precisely by means of jetting technique.

More in detail, the geopolymer mixture obtained from the combination of the solid component in powder form with the liquid component has proven surprisingly capable of ensuring a sufficient wettability relative to an inert granular material when sprayed thereon, so as to lead to the formation of very cohesive manufactured conglomerate items provided with mechanical characteristics that are comparable to and even better than the mechanical characteristics of the manufactured conglomerate items obtained via 3D printing, by means of jetting technique and employing known binders of different nature and in particular different inorganic binders, such as Sorel cement.

With respect to the other inorganic binders currently employed in the additive production of manufactured items, the binder with geopolymer base is capable of hardening in permanent contact with water and allows making manufactured items that can remain in permanent contact with the water. In particular, if the geopolymerization reaction correctly reaches completion, the manufactured items obtained by means of additive production via 3D printing with the use of a binder with geopolymer base are capable of resisting in contact with water even at temperatures equal to or higher than the boiling temperature of the latter.

The binder with geopolymer base also allows obtaining manufactured items by means of additive production, in particular per 3D printing, provided with a more compact microstructure, with a smaller porosity and hence provided with greater hardness with respect to manufactured items obtained by means of the use of known inorganic binders, such as Sorel cement.

The inorganic binder also has considerable flexibility of use. Geopolymers, in fact, are materials characterized by an extreme composition variability and can therefore have a microstructure as well as physical, mechanical, chemical and thermal properties that are quite variable, which can be optimized as a function of the characteristics desired for the manufactured item to be achieved.

Advantageously, the raw materials constituting the geopolymer compound adapted to be employed as binder, i.e. in particular a first solid component and a second liquid component adapted to be mixed in order to make the geopolymer mixture as better specified hereinbelow, are selected in order to obtain a geopolymer mixture preferably having viscosity not greater than 5000 cPoise (centipoise) during the workability interval of the mixture itself, i.e. during the time interval within which the mixture is susceptible of being mixed, transferred to the spraying nozzles and deposited on the inert granular material. In addition, the raw materials are preferably selected for ensuring a workability interval of the geopolymer mixture of at least 20 minutes, during which the viscosity of the mixture remains substantially constant.

In accordance with a particularly advantageous embodiment of the binders used in the invented process, the latter are obtained starting from a first solid component in powder form comprising reactive aluminosilicates and from a second liquid component comprising an alkaline aqueous solution, where the molar ratio between the water contained in the liquid component and the oxides which come to constitute the geopolymer network (such as aluminum oxide, silicon oxide, alkaline oxides or earth alkaline oxides, or phosphor oxides) is controlled in order to optimize both the reactivity of the mixture and its rheology, i.e. in order to regulate the workability time of the mixture and its wettability with regard to the inert granular material. The reactivity of the mixture, i.e. the reaction time, in fact depends not only on the composition of the raw materials selected for the making of the geopolymer, but also on the ratio between the water and the oxides contained therein, and hence it can be controlled by adjusting the latter ratio. In particular, the ratio between the water and the alumina contained in the solid component ($H_2O/Al_2O_3$) is advantageously comprised between 16 and 23 and, preferably, between 17 and 20. The ratio between the water and the other oxides directly results from the above-reported value, as a function of the type of network that one wishes to form.

The geopolymer mixture according to such embodiment, in fact, in addition to being easily sprayable through the nozzles of the print head, has shown an optimal capacity to wet and impregnate the bed of granular material. The quantity of water present in the geopolymer mixture and, more in detail, the molar ratio between the water contained in the liquid component and the oxides which come to constitute the geopolymer network, i.e. in particular the alumina, determine the characteristics both of the geopolymer mixture and of the geopolymer obtained from such mixture and hence of the manufactured item made by employing such geopolymer as binder. In particular, the optimal molar ratio between the water and the alumina allows conferring rheological characteristics to the geopolymer mixture that are adapted to allow the printing in a time sufficient interval before the consolidation of the mixture.

The molar ratio between water and alumina comprised in the above-indicated interval of values allows a nearly complete geopolymerization reaction of the geopolymer mixture, allowing the obtainment of suitable mechanical strength properties of the formed manufactured item, which would be negatively conditioned by an excessive water presence, and simultaneously optimal wettability properties of the geopolymer mixture with regard to the inert granular material, allowing the suitable impregnation of the latter. A geopolymer mixture having a molar ratio between water and alumina outside the above-indicated range could in any case allow making manufactured items by means of 3D printing, allowing the consolidation of the inert granular material, although optimal results might not be ensured in terms of stability of the solid manufactured item obtained at the end of the printing process unless the solid manufactured item is subjected to an additional thermal treatment (before or during its use), during which it is heated to temperatures higher than at least 100°C in order to facilitate the creation of stronger ceramic phases therein.

A geopolymer mixture which has proven particularly advantageous for being employed as binder in the invented process is obtained starting from metakaolin ($2Al_2O_3 \cdot SiO_2$) or calcined kaolin, in particular in combination with an aqueous solution containing a silicate or an alkaline hydroxide, such as a sodium or potassium silicate or hydroxide. The aforesaid raw materials, in fact, are characterized by low costs, which thus allow limiting the production costs for the manufactured items. In addition, such raw materials, when combined with a ratio between water and alumina comprised in the above-indicated range, allow obtaining a geopolymer mixture having rheological characteristics (and hence wettability) and a reactivity (and hence a capacity of forming geopolymer compounds) that are optimal.

As specified above, geopolymers synthesized starting from different compounds lead to different structures but above all to different characteristics, such as the gel time of the geopolymer mixture. In addition to the different raw materials, the molar ratios with which the same are present determine a different behavior of the final compound. A family of geopolymers particularly adapted for being employed as binders is that of polysialate-siloxanes (PSS). The latter, and in particular those with sodium base, show considerable fire resistance and resistance to high temperatures in general, as well as a high force of cohesion to steel substrates.

In accordance with an advantageous embodiment, the binder has alkaline base, i.e. obtained by employing a second liquid component comprising an aqueous alkaline solution and comprises a retardant additive, adapted to slow the start of the geopolymerization reaction between the first solid component and the second liquid component. The retardant additive can comprise any compound or set of compounds capable of performing a retardant action of the geopolymerization reaction, thus ensuring a more durable workability, i.e. viscosity values of the geopolymer mixture substantially constant for a time interval sufficient to allow a deposition of the geopolymer mixture that is as unchanging as possible over time. A retardant additive that is adapted to be employed in the formulation of the binder is for example an aqueous solution of sucrose, which has the advantage of being easily found on the market and is also particularly inexpensive.

Further or different additives can be added to the liquid geopolymer mixture, such additives suitably selected as a function of the characteristics of the specific selected geopolymer mixture in order to optimize one or more of such characteristics. For example, if the selected geopolymer mixture is characterized by a low reaction speed, instead of the retardant additives as specified above, accelerant additives can be added to the same mixture. Additives can also be added having the object of modifying the rheology of the mixture, such as fluidifying additives, or the wettability with regard to the powder bed, such as surfactants, without departing from the protective scope defined by the present patent.

Forming the object of the present invention is a process for the additive production of manufactured items, in particular by means of 3D printing with jetting technique, by making use of a binder with geopolymer base, in particular of the above-described type. The process according to the present invention comprises the operating steps as described hereinbelow.

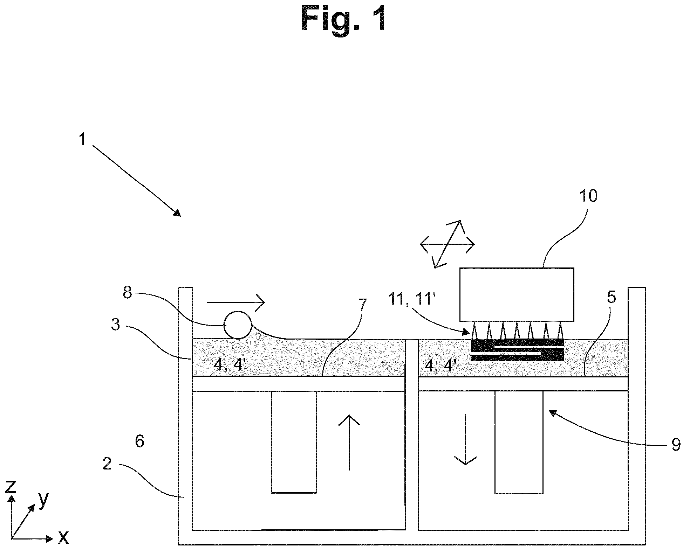

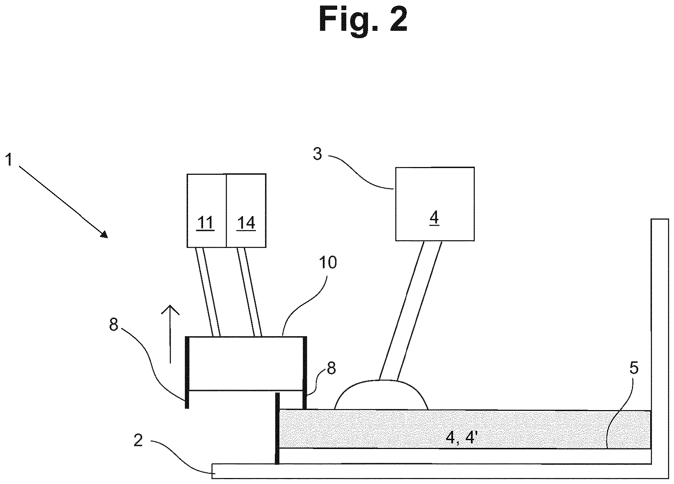

Advantageously, a step is first provided for the computer modeling of the structure of the final manufactured item that one wishes to obtain by means of the use of CAD design programs, capable of reconstructing a 3D model of the desired manufactured item. The latter is divided into successive cross sections ordered from bottom to top, delimited by planes parallel and orthogonal to the vertical, in particular equidistant from each other according to a predetermined pitch, in a manner such that such sections, printed in sequence, come to form the designed structure. Each cross section of the 3D model comprises solid and void areas, corresponding to the solid and void parts of the structure. An initial step is also advantageously provided for arranging an apparatus 1 for the 3D printing by means of jetting technique, which is schematically represented in the enclosed Figures 1 and 2 respectively in accordance with a first and a second possible embodiment.

The apparatus 1 comprises a support structure 2 having, associated therewith, a tank 3 for containing an inert granular material 4 or a mixture in granular form 4' containing the inert granular material, as better explained hereinbelow. The support structure 2 also has, associated therewith, a work surface 5 adapted to receive thereon successive layers of the inert granular material 4, or of the mixture in granular form 4', coming from the tank 3, and such layers are distributed on the work surface 5 in a controlled manner.

More in detail, in the machine in accordance with the first embodiment of figure 1, the tank 3 is arranged alongside the work surface 5, while in the machine in accordance with the second embodiment of figure 2, the tank 3 can also be arranged in a remote position with respect to the work surface 5.

The tank 3 comprises means for positioning the inert material 4, or the granular mixture 4', towards the work surface 5.

In the first embodiment of figure 1, such positioning means comprise a first piston 6 adapted to lift the bottom 7 of the tank 3 along a vertical direction Z by a predefined pitch each time a new layer of inert material 4, or granular mixture 4', must be deposited on the work surface 5, and a distribution roller 8, adapted to push and compress a predetermined quantity of inert material 4, or granular mixture 4', towards the work surface 5 in order to deposit a layer of inert material 4, or granular mixture 4', thereon, i.e. on the previously-deposited layers. The work surface 5 is associated with a second piston 9, adapted to lower the work surface 5 by a predefined pitch each time a new layer of inert material 4, or granular mixture 4', must be deposited thereon.

In the second embodiment of figure 2, such positioning means for example comprise a duct 12 for supplying the inert material 4, or the granular mixture 4', towards the work surface 5 and a distribution bar 13 adapted to distribute the inert material deposited by the supply duct 12 on the work surface 5.

The apparatus 1 also comprises a print head 10, adapted to selectively deposit on the work surface 5, or on each layer of inert material 4 or granular mixture 4' deposited thereon, a component in liquid or semi-liquid form, as is better explained hereinbelow, adapted to make a rigid matrix on the bed of inert granular material 4 or granular mixture 4' that incorporates the granules of inert material in order to define a corresponding cross section of the final manufactured item.

For such purpose, the print head 10 is moved on a plane XY parallel to the work surface 5, in particular along an axis X termed "quick axis" since it is that along which the print head 10 is moved, and along an axis Y, termed "slow axis" since it is that along which the head 5 is moved a few millimeters after having completely traveled along the axis X.

In the second embodiment of figure 2, the work surface 5 is fixed and the print head 10 is lifted by a predefined pitch each time a new layer of inert material 4, or granular mixture 4', must be deposited on the work surface 5. Advantageously, the distribution bar 13 for the inert material on the work surface 5 is associated with the print head 10 and is in particular arranged on the latter upstream of the spraying nozzles with respect to the advancing direction of the print head 10, as illustrated in Figure 2, so as to level and compress the inert material 4, or the granular mixture 4', before the second liquid component or the geopolymer mixture is released on the latter.

The process according to the present invention provides for a first step of arranging an inert granular material 4, adapted to define the aggregate of the final conglomerate with which the manufactured item is obtained. The inert granular material 4 can be selected as a function of the properties that one wishes to confer to the final manufactured item, i.e. as a function of the production or economical requirements. Inert materials that have proven particularly suitable for the production of manufactured items made of conglomerate by means of the process according to the invention are for example marble or rock powders in general, sand, and in any case even recycled materials can be used, such as bricks, tiles or plasters suitably ground or other materials that are adapted for such purpose, without departing from the protective scope defined by the present patent. The grain size of the inert material, which can be in the form of powders, of fibers, of platelets or with other form factors, as specified above, can be optimized for improving the strength of the final manufactured item and for ensuring the possibility to spread a uniform layer of powder. In addition, reinforcement materials such as fibers and minerals can be added to the inert granular material 4 in order to increase the resilience and tendency of the finished manufactured item to be isotropic, which is instead reduced due to the stratification process. Organic materials can also be added to the powder bed in order to modify and optimize some properties of the inert granular material, i.e. of the solid manufactured item obtained therewith. For example, such additions of organic material can improve properties such as the absorption of impact energy, the thermal insulation or the acoustic insulation of the manufactured items.

In particular, the inert granular material 4 (or the mixture in granular form 4' containing the inert granular material) is arranged inside the tank 3 of the apparatus 1.

A second step is then provided for arranging a first solid component 14 in powder form, comprising reactive geopolymer precursors, such as aluminosilicates, and a second liquid component 11 comprising an alkaline aqueous solution. The first solid component 14 and the second liquid component 11 are adapted to react in order to form a binder with geopolymer base.

The second liquid component 11 (or a geopolymer mixture 11' obtained by mixing the second liquid component with the first solid component 14, as better specified hereinbelow) is arranged inside a containment tank associated with the print head 10 of the apparatus 1. In particular, the containment tank can be arranged on the print head 10 or positioned outside the print head and be transported thereto by means of suitable ducts. The process then comprises a step of distributing, on a work surface 5, a uniform layer of predetermined thickness of the inert granular material 4 or of the mixture in granular form 4'. In particular, during such distribution step, a dose of inert granular material 4 or of the mixture in granular form 4' is released on the work surface 5 and distributed thereon.

In accordance with the first embodiment of the machine of figure 1, following the elevation of the bottom 7 of the tank 3 by means of the first piston 6, the distribution roller 8 of the tank 3 pushes a predetermined quantity of inert material 4, or granular mixture 4', towards the work surface 5 in order to create thereon, or on a previously deposited layer, the aforesaid layer of predetermined thickness.

In accordance with the second embodiment of the machine of figure 2, the desired dose of inert granular material 4 or of the mixture in granular form 4' is released by the supply duct 12 on the work surface 5 and is then distributed on the latter to form a substantially uniform thickness by means of the distribution bar 13.

Subsequently, a step is provided for selective impregnation of pre-selected areas of the layer of inert granular material 4, or of the mixture in granular form 4', and during such step of selective impregnation the second liquid component 11, or the geopolymer mixture 11', is deposited on the aforesaid pre-selected areas of the layer of inert material, or of the mixture in granular form 4', in order to define a corresponding cross section of a desired manufactured item, impregnating the inert granular material and forming, following the geopolymerization reaction of the first solid component in contact with the second liquid component, a rigid matrix that incorporates the granules of inert material. In particular, during the impregnation step, the print head 10 is moved in a controlled manner, for example by means of a non-illustrated control unit, along the orthogonal axes X, Y parallel to the work surface 5, and hence to the layer of inert material 4 or of mixture in granular form 4' deposited thereon, according to the characteristics of the structure of the manufactured item that one wishes to obtain, recorded in a computer file. The second liquid component 11, or the geopolymer mixture 11', is then selectively released or sprayed by the print head 10 on the pre-selected areas of the layer of inert material 4 or of the mixture in granular form 4'.

The process according to the invention then provides that the step of distributing of the inert granular material 4 (or of the mixture in granular form 4') and the step of selective impregnation of the layer thus formed with the second liquid component 11 (or with the geopolymer mixture 11') are repeated until all the cross sections of the desired manufactured item are defined, thus obtaining a formed manufactured item.

The process according to the present invention, due to the use of the binder with geopolymer base, allows simply, quickly, automatically and inexpensively making manufactured items provided with improved mechanical properties, hardness and resistance in contact with water with respect to the manufactured items made with additive processes of known type employing inorganic air binders.

In accordance with a preferred embodiment, the process according to the present invention also comprises a step of mixing the first solid component 14, containing the reactive geopolymer precursors, with the second liquid component 11 in order to obtain a geopolymer mixture binder 11'. Such mixing step precedes the impregnation step and the latter is executed by means of the distribution of the geopolymer mixture binder on the uniform layer of inert granular material 4.

For such purpose, in particular, the first solid component and the second liquid component can be mixed outside the print head 10 and sent to the latter already mixed, or they can be mixed directly in the print head 10.

Preferably, in the present embodiment of the process according to the invention, in the distribution step only the inert granular material 4 is distributed on the work surface.

Such embodiment of the process according to the invention ensures a close contact between the first solid component and the second liquid component. This facilitates a more complete geopolymerization reaction and therefore ensures the attainment of improved characteristics in the final manufactured item obtained by means of the present process.

In accordance with a variant of such preferred embodiment of the process according to the invention, the temperature of the geopolymer mixture is maintained at a temperature different from the ambient temperature, i.e. in particular different from the interval comprised between 15 °C and 20 °C. For example, for a mixture with high reactivity (with quick geopolymerization reaction), such as a mixture obtained from a first component comprising reactive aluminosilicates and a second component comprising an alkaline solution, the temperature is preferably maintained in an interval between 0 °C and 10 °C and preferably between 3 °C and 6 °C.

Indeed, the temperature at which the geopolymerization reaction is conducted affects the course of the reaction itself, and consequently also the rheology of the solution used for printing.

The geopolymer mixture constituted by the solid component in powder form mixed with the liquid component has a non-Newtonian behavior and tends towards the gel point. The viscosity of such mixture quickly increases as the polymerization reaction progresses, such that it is difficult to ensure a sufficient work time of such mixture during which its viscosity remains nearly constant.

On such matter, it is observed that the geopolymerization reaction tends to occur more rapidly at temperatures higher than the ambient temperature. Such acceleration of the geopolymerization reaction is due to the fact that higher temperatures facilitate the formation of oligomers and hence the quick attainment of the gel point.

Therefore, in order to ensure the correct work (print) time of the geopolymer mixture, the latter is arranged at a temperature such to allow an appropriate geopolymerization reaction speed.

This ensures a constant fluidity (rheological behavior) of the geopolymer mixture for at least 20÷25 minutes following the mixing of the first solid component with the second liquid component. In accordance with the characteristics of the piece to be printed (shape, size), the stability time of the geopolymer mixture can be further varied in wide range of values (from a few minutes to several hours).

In particular the appropriate temperature of the mixture can be obtained by subjecting the mixture after its formation to cooling or heating, or by cooling or heating the second liquid component, possibly mixed with suitable additives, adapted to be mixed with the first solid component during the mixing step and then maintaining the mixture at the desired temperature.

Preferably, the stirring of the geopolymer mixture during the mixing step is protracted for a maximum time of 30 minutes, in any case suitable for ensuring an optimal level of geopolymerization of the mixture before the latter is deposited on the bed of inert granular material.

The degree of advancement of the geopolymerization reaction is in fact greater the greater the mixing time of the geopolymer mixture. This effect can be translated into a variation of the viscosity and in the anticipation of the gel point of the geopolymer mixture. The above-specified maximum stirring time allows ensuring a suitable working time, i.e. sufficiently long to allow the distribution of the geopolymer mixture on a layer of inert material in nearly-constant viscosity conditions thereof, and at the same time sufficiently reduced so to avoid extending production times. In addition, the mixing ensures that the geopolymerization reaction has reached an appropriate stage of completeness before the printing is executed. Indeed, the evaporation of the water following the printing interrupts the geopolymerization reaction and consequently the deposited binder, if not suitably pre-polymerized, would not have the desired hydraulic characteristics.

Preferably, the process according to the present invention in accordance with the above-reported preferred embodiment also comprises a step of metering a first quantity of the first solid component and a second quantity of the second liquid component which precedes the mixing step of such components. In particular, the first quantity of the first solid component and the second quantity of the second liquid component re susceptible of jointly defining substantially the exact quantity of binder necessary for impregnating the pre-selected areas of the corresponding layer of inert granular material. Additives can be added to such mixture in order to modify the characteristics thereof.

More clearly, the first solid component and the second liquid component are metered and mixed just before each step of impregnation of the layer of inert granular material 4 and in the correct quantity necessary for impregnating, only in the pre-selected areas, the corresponding layer.

This ensures the same properties of the geopolymer mixture for each impregnated layer of inert material 4, since the geopolymer mixture has a variable behavior over time.

In accordance with a different embodiment, the process according to the present invention provides that the first solid component of the binder is admixed with the inert granular material 4, instead of being mixed with the second liquid component and distributed with the latter on the bed of inert granular material 4. For such purpose, the process comprises a step of mixing the first solid reactive component with the inert granular material 4, in order to obtain a mixture in granular form 4' adapted to be distributed on the work surface 5. The latter mixing step thus precedes the distribution step, during which the mixture in granular form 4', comprising the first solid component and the inert granular material, is distributed on the work surface 5. The impregnation step is in such case executed by means of the distribution of only the second liquid component on the uniform layer of the mixture in granular form 4'.

The latter embodiment of the process according to the invention allows remedying the drawbacks relative to the limited work time of the geopolymer mixture, since the geopolymer reaction only occurs on the bed of granular material, following the contact of the second liquid component deposited thereon with the first solid component present in the mixture in granular form 4'.

Advantageously, the process according to the invention can comprise a step of successive thermal treatment of the formed manufactured item in order to lead to the formation of ceramic phases in the latter. Advantageously such thermal treatment can be conducted by heating the formed manufactured item to a temperature comprised between 100°C and 1500°C. The geopolymer compounds present in the formed manufactured item, in fact, crystallize when heated, forming ceramic phases that can have high melting temperatures, even higher than 1500 °C.

Such thermal treatment can also be executed during the use of the manufactured item itself, if the latter is intended to be employed at a temperature comprised in the above-reported range.

The manufactured items obtained at the end of the deposition and impregnation steps, therefore, can be simply left to rest for a suitable time period, e.g. 24 hours, in order to allow the geopolymerization reaction to be completed and the matrix thus formed to be hardened, or they can be further subjected to a thermal treatment, as a function of the characteristics sought in the final manufactured item.

Embodiment:

Hereinbelow, an embodiment is described relative to a binder and to a process in accordance with the present invention, and the results of the mechanical characterization tests executed on the obtained manufactured items are reported hereinbelow.

In the example reported herein, a binder was used comprising a geopolymer with empirical formula:

$$R_n[-SiO_2 - AlO_2-]_n \cdot wH_2O$$

R signifies monovalent alkali ion, such as $Na^+$ and $K^+$ and n degree of polymerization.

In particular, in the present embodiment it was selected to use as monovalent alkali ion that of sodium. It was in fact established that the Si-O-Al triad tends to assume a more rigid structure if a sodium ion is present rather than other monovalent cations, since $Na^+$ has a smaller ionic radius and a greater charge density.

The above-reported binder was in particular obtained starting from metakaolin containing reactive aluminosilicates, as first solid component, and by an aqueous sodium silicate solution, as second liquid component.

In particular the raw materials employed for obtaining the geopolymer mixture were selected in order to have the following molar ratios:

$$Na_2O \,/\, SiO_2 = 0.263$$

$$SiO_2 \,/\, Al_2O_3 = 3.8$$

$$Na_2O \,/\, Al_2O_3 = 1$$

for the purpose of obtaining a geopolymer structure provided with good strength and durability.

A molar ratio between water and alumina equal to 17 was also selected, since it proved optimal for the selected geopolymer in order to confer a suitable wettability of the inert granular material and a suitable reactivity of the mixture.

The second liquid component was admixed with a retardant additive, constituted by an aqueous solution of sucrose, with sucrose to water ratio of 2:1.

As inert granular material, an inert powder of "Bianco di Zandobbio", or Dolomite was also arranged, having a grain size comprised between 0.2 mm and 1.2 mm.

The second liquid component was admixed with the first solid component at a temperature of about 4°C and the first solid component and the second liquid component were mixed for 5 minutes. For the selected geopolymer mixture, in fact, it was possible to establish that the use of the second liquid component at the above-indicated temperature allowed extending the "useful" work time, i.e. the viscosity plateau in which it assumes a nearly constant value.

The mixture, following the mixing step, was distributed on an inert powder bed of "Bianco di Zandobbio" as specified above. The steps of mixing and distribution of the mixture on a renewed inert powder bed were repeated until all the cross sections are obtained of a substantially cubic sample, with 1.5 cm side.

Each of the samples thus obtained was subjected to compression strength tests, by using an Instron instrument with stainless steel support plates, both in transverse direction, i.e. with a direction of application of the stress substantially orthogonal to the printed layers, and in longitudinal direction, i.e. with a direction of application of the stress substantially parallel to the printed layers.

The compression strength values were derived from the application of the formula:

$$\sigma = F/A$$

with A intended as the area in mm$^2$ of application of the stress and F the value in Newton of maximum stress that the sample is capable of undergoing.

Reported in Table 1 hereinbelow is the data obtained from the compression strength tests on four samples obtained with the geopolymer binder, as specified above.

**Table 1**

| SAMPLE | DIRECTION | AVERAGE COMPRESSION STRENGTH [*MPa*] | ± STANDARD DEVIATION [*MPa*] |
|---|---|---|---|
| 1 | TRANSVERSE | 4.57 | 1.76 |
| | LONGITUDINAL | 17.30 | 3.35 |
| 2 | TRANSVERSE | 4.93 | 1.54 |
| | LONGITUDINAL | 16.12 | 3.97 |
| 3 | TRAVERSALE | 7.69 | 2.34 |
| | LONGITUDINAL | 11.96 | 4.88 |
| 4 | TRANSVERSE | 9.04 | 0.05 |
| | LONGITUDINAL | 20.43 | 3.05 |

The above-reported results were compared with the results obtained from compression tests executed in the same conditions on cubic samples having the same size and obtained with the same printing process, using the same inert granular material but an inorganic air binder constituted by Sorel magnesia cement rather than the geopolymer binder. Reported in Table 2 reported hereinbelow is the data obtained from the compression strength tests on two samples obtained with the above-specified air binder.

**Table 2**

| SAMPLE | DIRECTION | AVERAGE COMPRESSION STRENGTH [*MPa*] | ± STANDARD DEVIATION [*MPa*] |
|---|---|---|---|
| 1a | TRANSVERSE | 1.49 | 0.27 |
| | LONGITUDINAL | 2.17 | 0.63 |
| 2a | TRANSVERSE | 1.66 | 0.13 |
| | LONGITUDINAL | 2.09 | 0.38 |

It was therefore possible to establish that the geopolymer binder is characterized by an improved compression strength with respect to an inorganic air binder of known type. For greater clarity, the comparison between the obtained results is reported in the following Table 3.

**Table 3**

| BINDER | TRANSVERSE COMPRESSION STRENGTH [*MPa*] | $\dfrac{\sigma_{GEOPOLYMER}}{\sigma_{SOREL\ CEMENT}}$ | LONGITUDINAL COMPRESSION STRENGTH [*MPa*] | $\dfrac{\sigma_{GEOPOLYMER}}{\sigma_{SOREL\ CEMENT}}$ |
|---|---|---|---|---|
| Sorel Cement | 1.58 | 4.15 | 2.13 | 7.72 |
| Geopolymer | 6.56 | | 16.45 | |

Further measurements were also executed in order to evaluate the porosity of the samples obtained with the binder with geopolymer base and in order to compare the latter with the porosity of the samples obtained employing Sorel cement as binder.

The porosity, in fact, i.e. in general the ratio between the volume occupied by the pores, or voids, and the total volume of the material under examination, has an important effect in particular on the capacities of thermal and acoustic insulation, of mechanical strength and on the density of the obtained final manufactured item.

In particular, reported hereinbelow are the average open porosity values (PA) obtained for the samples with geopolymer binder and with Sorel binder, where with open porosity it is intended the scalar value or percentage that determines the presence of pores connected together or in connection with the outside environment and derived from the formula:

$$\%PA = \left(1 - \frac{\rho_{GEOMETRIC}}{\rho_{APPARENT}}\right) \cdot 100$$

where $\rho_{GEOMETRIC}$ is the density value of the material considered as the ratio between its mass, measured with balance, and its geometric volume, measured with caliper; $\rho_{APPARENT}$ is the density value provided by a helium pycnometer using fragments of the printed samples, it is the density value obtained excluding the open porosity.

Reported in the following Table 4 is the average open porosity data, in percentage value, of the sample obtained with the geopolymer binder, as specified above, and employing Sorel cement come binder.

**Table 4**

| BINDER | AVERAGE OPEN POROSITY [%] |
|---|---|
| Sorel cement | 43.8 |
| Geopolymer | 30.4 |

From the above-reported data, it is possible to observe that the use of the geopolymer binder allows obtaining manufactured items provided with a smaller porosity, i.e. more compact, and hence provided with improved mechanical strength and durability characteristics with respect to manufactured items obtained with known inorganic binders currently available on the market, such as Sorel cement.

The finding thus conceived therefore attains the pre-established objects.

Of course, it can assume, in the practical achievement thereof, shapes and configurations that are even different from that illustrated above, without departing from the present protective scope.

**Claims**

1. Process for the additive production of manufactured items by making use of a substantially inorganic binder with geopolymer base adapted to be distributed on a layer of inert granular material in order to form a rigid matrix incorporating the granules of said inert granular material, wherein the binder is obtained starting from a first solid component in powder form comprising reactive aluminosilicates and from a second liquid component comprising an alkaline aqueous solution, the molar ratio between the water contained in the second liquid component and the oxides contained in the first solid component and in the second liquid component, which come to constitute the geopolymer network, being controlled in order to optimize both the reactivity of the mixture and its rheology;

such process comprising:

- a first step of arranging said inert granular material;
- a second step of arranging said first solid component in powder form, comprising reactor geopolymer precursors, and said second liquid component comprising an alkaline aqueous solution containing hydroxides or alkaline silicates, the first solid component and the second liquid component being adapted to react to form said binder with geopolymer base;

wherein said process further comprises:

**either:**

- a step of distributing, on a work surface, a uniform layer of predetermined thickness of at least said inert granular material;
- a step of mixing said first solid component with said second liquid component in order to obtain a geopolymer binder mixture;
- a step of selective impregnation of pre-selected areas of said layer with said geopolymer binder mixture, said impregnation being executed by means of the distribution of said geopolymer binder mixture on the uniform layer of said inert granular material, in order to define a corresponding cross section of a desired manufactured item, impregnating said inert granular material and forming, following geopolymerization reaction of said first solid component of the geopolymer binder mixture in contact with said second liquid component of the geopolymer binder mixture, a rigid matrix that incorporates said granules of inert material;
- repeating said distribution step and said selective impregnation step until all the cross sections of the desired manufactured item have been defined, obtaining a formed manufactured item;

**or:**

- a step of mixing said first solid component with said inert granular material, in order to obtain a mixture in granular form adapted to be distributed on a work surface;
- a step of distributing, on a work surface, a uniform layer of predetermined thickness of said mixture in granular form comprising said first solid component and said inert granular material; wherein the step of mixing said first solid component with said inert granular material precedes the step of distributing said mixture in granular form;
- a step of selective impregnation of pre-selected areas of said layer only with said second liquid component in order to define a corresponding cross section of a desired manufactured item, impregnating said mixture in granular form and forming, following geopolymerization reaction of said first solid component in contact with said second liquid component, a rigid matrix that incorporates said granules of inert material;
- repeating said distribution step and said selective impregnation step until all the cross sections of the desired manufactured item have been defined, obtaining a formed manufactured item.

2. Process according to claim 1, **characterized in that** the molar ratio between the water and the alumina contained in said first solid component ($H_2O/Al_2O_3$) is comprised between 16 and 23.

3. Process according to claim 2, **characterized in that** the molar ratio between the water and the alumina contained in said first solid component ($H_2O/Al_2O_3$) is comprised between 17 and 20.

4. Process according to claim 2 or 3, **characterized in that** said binder comprises one or more additives selected from among retardant additives, adapted to slow the start of the geopolymerization reaction between the first solid component and the second liquid component, accelerant additives, adapted to increase the reaction speed, fluidifying additives, adapted to increase the rheological characteristics of the mixture, or surfactants, adapted to improve the wettability with regard to the powder bed.

**5.** Process according to claim 1, **characterized in that** the mixture of the first solid component with the second liquid component is maintained at a different temperature from the ambient temperature and in particular at a temperature lower than the ambient temperature if the geopolymer mixture is a mixture with high reactivity and with a temperature higher than the ambient temperature if the geopolymer mixture is a mixture with low reactivity.

**6.** Process according to claim 1, **characterized in that**, during the step of mixing the first solid component with the second liquid component, the stirring of the geopolymer binder mixture containing the first solid component and the second liquid component is protracted for a maximum time of 30 minutes and in any case suitable for ensuring an optimal level of geopolymerization of the mixture before the latter is deposited on the bed of inert granular material.

**7.** Process according to claim 1, **characterized in that** it also comprises a step of metering a first quantity of the first solid component and a second quantity of the second liquid component which precedes the step of mixing the first solid component with the second liquid component, said first quantity and said second quantity being susceptible of jointly defining the quantity of binder necessary for impregnating the pre-selected areas of the corresponding layer of inert granular material.

**8.** Process according to claim 1, **characterized in that** it also comprises a step of thermal treatment of the formed manufactured item, in order to lead to the formation of ceramic phases in the latter.

**Patentansprüche**

**1.** Verfahren zur Herstellung von Erzeugnisse unter Einsatz eines im Wesentlichen anorganischen geopolymer-basierten Bindemittels, das geeignet ist, auf einer Schicht inerten Granulats verteilt zu werden, um eine steife Matrix zu bilden und so die Körner des genannten inerten Granulats aufzunehmen, wobei das Bindemittel ausgehend von einer ersten festen Komponente in Pulverform erhalten wird, die reaktive Alumosilicate umfasst, und von einer zweiten flüssigen Komponente, die eine alkaline wässrige Lösung umfasst, wobei das Stoffmengenverhältnis zwischen dem in der zweiten flüssigen Komponente enthaltenen Wasser und den in der ersten festen Komponente und in der zweiten flüssigen Komponente enthaltenen Oxiden, die das Geopolymernetzwerk bilden werden, kontrolliert wird, um sowohl die Reaktivität der Mischung als auch ihre Rheologie zu optimieren;

wobei dieses Verfahren Folgendes umfasst:

- einen ersten Schritt des Anordnens des genannten inerten Granulats;
- einen zweiten Schritt des Anordnens der genannten ersten festen Komponente in Pulverform, die Reaktor-Geopolymer-Vorstufen umfasst, und der genannten zweiten flüssigen Komponente, die eine Hydroxide oder alkalische Silikate enthaltende alkalische wässrige Lösung umfasst, wobei die genannte erste feste Komponente und die zweite flüssige Komponente geeignet sind, zu reagieren, um das genannte geopolymer-basierte Bindemittel zu bilden;

wobei das genannte Verfahren außerdem Folgendes umfasst:

**entweder:**

- einen Schritt des Verteilens einer gleichmäßigen Schicht mit einer bestimmten Dicke mindestens des genannten inerten Granulats auf einer Arbeitsfläche;
- einen Schritt des Mischens der genannten ersten festen Komponente mit der genannten zweiten flüssigen Komponente, um eine Geopolymer-Bindemittel-Mischung zu erhalten;
- einen Schritt der selektiven Imprägnierung von ausgewählten Bereichen der genannten Schicht mit der genannten Geopolymer-Bindemittel-Mischung, wobei die genannte Imprägnierung mittels der Verteilung der genannten Geopolymer-Bindemittel-Mischung auf der gleichmäßigen Schicht des genannten inerten Granulats erfolgt, um einen entsprechenden Querschnitt eines gewünschten Erzeugnisses zu definieren, indem das genannte inerte Granulat imprägniert und im Anschluss an eine Geopolymerisationsreaktion der genannten ersten festen Komponente der Geopolymer-Bindemittel-Mischung im Kontakt mit der genannten zweiten flüssigen Komponente der Geopolymer-Bindemittel-Mischung eine starre Matrix gebildet wird, die die genannten Körner des inerten Materials enthält;
- Wiederholung des genannten Verteilungsschritts und des genannten selektiven Imprägnierungsschritts, bis alle Querschnitte des gewünschten Erzeugnisses definiert wurden, so dass ein geformtes Erzeugnis erzielt wird;

**oder:**

- einen Schritt des Mischens der genannten ersten festen Komponente mit dem genannten inerten Granulat, um eine Mischung in Granulatform zu erhalten, die geeignet ist, auf einer Arbeitsfläche verteilt zu werden;
- einen Schritt des Verteilens einer gleichmäßigen Schicht mit einer bestimmten Dicke der genannten Mischung in Granulatform, die die genannte erste feste Komponente und das genannte inerte Granulat umfasst auf einer Arbeitsfläche; wobei der Schritt des Mischens der genannten ersten festen Komponente mit dem genannten inerten Granulat dem Schritt des Verteilens der genannten Mischung in Granulatform vorausgeht;
- einen Schritt der selektiven Imprägnierung von ausgewählten Bereichen der genannten Schicht nur mit der genannten zweiten flüssigen Komponente, um einen entsprechenden Querschnitt eines gewünschten Erzeugnisses zu definieren, indem die genannte Mischung in Granulatform imprägniert und im Anschluss an eine Geopolymerisationsreaktion der genannten ersten festen Komponente im Kontakt mit der genannten zweiten flüssigen Komponente eine starre Matrix gebildet wird, die die genannten Körner des inerten Materials enthält;
- Wiederholung des genannten Verteilungsschritts und des genannten selektiven Imprägnierungsschritts, bis alle Querschnitte des gewünschten Erzeugnisses definiert wurden, so dass ein geformtes Erzeugnis erzielt wird.

2. Verfahren nach Anspruch 1, **dadurch gekennzeichnet, dass** das Stoffmengenverhältnis zwischen dem Wasser und dem in der genannten ersten festen Komponente enthaltenen Aluminiumoxid ($H_2O/Al_2O_3$) zwischen 16 und 23 beträgt.

3. Verfahren nach Anspruch 2, **dadurch gekennzeichnet, dass** das Stoffmengenverhältnis zwischen dem Wasser und dem in der genannten ersten festen Komponente enthaltenen Aluminiumoxid ($H_2O/Al_2O_3$) zwischen 17 und 20 beträgt.

4. Verfahren nach Anspruch 2 oder 3, **dadurch gekennzeichnet, dass** das genannte Bindemittel ein oder mehrere unter hemmenden Additiven gewählte Additive, die geeignet sind, den Beginn der Geopolymerisationsreaktion zwischen der ersten festen Komponente und der zweiten flüssigen Komponente zu verlangsamen, beschleunigende Additive, die geeignet sind, die Reaktionsgeschwindigkeit zu beschleunigen, verflüssigende Additive, die geeignet sind, die rheologischen Eigenschaften der Mischung zu steigern, oder grenzflächenaktive Stoffe, die geeignet sind, die Benetzbarkeit in Bezug auf das Pulverbett zu verbessern, umfasst.

5. Verfahren nach Anspruch 1, **dadurch gekennzeichnet, dass** die Mischung aus der ersten festen Komponente und der zweiten flüssigen Komponente bei einer von der Umgebungstemperatur verschiedenen Temperatur gehalten wird und insbesondere bei einer niedrigeren Temperatur als die Umgebungstemperatur, wenn es sich bei der Geopolymermischung um eine Mischung mit hoher Reaktivität handelt und bei einer höheren Temperatur als die Umgebungstemperatur, wenn es sich bei der Geopolymermischung um eine Mischung mit niedriger Reaktivität handelt.

6. Verfahren nach Anspruch 1, **dadurch gekennzeichnet, dass** während des Schritts des Mischens der ersten festen Komponente mit der zweiten flüssigen Komponente das Rühren der die erste feste Komponente und die zweite flüssige Komponente enthaltenden Geopolymer-Bindemittel-Mischung maximal 30 Minuten lang fortgesetzt wird und in jedem Fall für eine Dauer, die geeignet ist, einen optimalen Grad der Geopolymerisation der Mischung zu gewährleisten, bevor Letztere auf das Bett aus inertem Granulat aufgetragen wird.

7. Verfahren nach Anspruch 1, **dadurch gekennzeichnet, dass** es außerdem einen Schritt des Dosierens einer ersten Menge der ersten festen Komponente und einer zweiten Menge der zweiten flüssigen Komponente umfasst, der dem Schritt des Mischens der ersten festen Komponente mit der zweiten flüssigen Komponente vorausgeht, wobei die genannte erste Menge und die genannte zweiten Menge geeignet sind, zusammen die zum Imprägnieren der ausgewählten Bereiche der entsprechenden Schicht inerten Granulats notwendige Menge Bindemittels zu definieren.

8. Verfahren nach Anspruch 1, **dadurch gekennzeichnet, dass** es außerdem einen Schritt der Wärmebehandlung des geformten Erzeugnisses umfasst, um zur Bildung von keramischen Phasen in Letzterem zu führen.

**Revendications**

1. Procédé de fabrication additive pour la manufacture des articles utilisant un liant substantiellement inorganique à base de géopolymère adapté pour être distribué sur une couche de matériau granulaire inerte de manière à former une matrice rigide incorporant les granules dudit matériau granulaire inerte, où le liant est obtenu à partir d'un premier composant solide sous forme de poudre comprenant des aluminosilicates réactives et à partir d'un second composant liquide comprenant une solution aqueuse alcaline, le rapport molaire entre l'eau contenue dans le second composant liquide et les oxydes contenus dans le premier composant solide et dans le second composant liquide, qui viennent pour constituer le réseau géopolymère, étant commandé de manière à optimiser aussi bien la réactivité du mélange que sa rhéologie ;

ce procédé comprenant :

- une première étape d'agencement dudit matériau granulaire inerte ;
- une seconde étape d'agencement dudit premier composant solide sous forme de poudre, comprenant des précurseurs de géopolymère de réacteur, et ledit composant liquide comprenant une solution aqueuse alcaline contenant des hydroxydes ou des silicates alcalins, le premier composant solide et le second composant liquide étant adaptés pour réagir pour former ledit liant à base de géopolymère ;

où ledit procédé comprend en outre :

**soit** :

- une étape de distribution, sur une surface de travail, d'une couche uniforme d'épaisseur prédéterminée d'au moins dudit matériau granulaire inerte ;
- une étape de mélange dudit premier composant solide avec ledit second composant liquide de manière à obtenir un mélange de liant géopolymère ;
- une étape d'imprégnation sélective de zones présélectionnées de ladite couche avec ledit mélange de liant géopolymère, ladite imprégnation étant exécutée au moyen de la distribution dudit mélange de liant géopolymère sur la couche uniforme dudit matériau granulaire inerte, de manière à définir une section transversale correspondante d'un article manufacturé souhaité, imprégnant ledit matériau granulaire inerte et formant, suivant la réaction de géopolymérisation dudit premier composant solide du mélange de liant géopolymère en contact avec ledit second composant liquide du mélange de liant géopolymère, une matrice rigide qui incorpore lesdits granules de matériau inerte ;
- la répétition de ladite étape de distribution et de ladite étape d'imprégnation sélective jusqu'à ce que toutes les sections transversales de l'article manufacturé souhaité aient été définies, l'obtention d'un article manufacturé formé ;

**ou** :

- une étape de mélange dudit premier composant solide avec ledit matériau granulaire inerte, de manière à obtenir un mélange sous forme granulaire adapté pour être distribué sur une surface de travail ;
- une étape de distribution, sur une surface de travail, d'une couche uniforme d'épaisseur prédéterminée dudit mélange sous forme granulaire comprenant ledit premier composant solide et ledit matériau granulaire inerte ; où l'étape de mélange dudit premier composant solide avec ledit matériau granulaire inerte précède l'étape de distribution dudit mélange sous forme granulaire ;
- une étape d'imprégnation sélective de zones présélectionnées de ladite couche seulement avec ledit second composant liquide de manière à définir une section transversale correspondante d'un article manufacturé souhaité, imprégnant ledit mélange sous forme granulaire et formant, suivant la réaction de géopolymérisation dudit premier composant solide en contact avec ledit second composant liquide, une matrice rigide qui incorpore lesdits granules du matériau inerte ;
- la répétition de ladite étape de distribution et de ladite étape d'imprégnation sélective jusqu'à ce que toutes les sections transversales de l'article manufacturé souhaité aient été définies, l'obtention d'un article manufacturé formé.

**2.** Procédé selon la revendication 1, **caractérisé en ce que** le rapport molaire entre l'eau et l'alumine contenues dans ledit premier composant solide ($H_2O/Al_2O_3$) est compris entre 16 et 23.

**3.** Procédé selon la revendication 2, **caractérisé en ce que** le rapport molaire entre l'eau et l'alumine contenues dans ledit premier composant solide ($H_2O/Al_2O_3$) est compris entre 17 et 20.

**4.** Procédé selon la revendication 2 ou 3, **caractérisé en ce que** ledit liant comprend un ou plusieurs additifs choisis parmi des additifs retardateurs, adaptés pour ralentir le démarrage de la réaction de géopolymérisation entre le premier composant solide et le second composant liquide, des additifs accélérateurs, adaptés pour augmenter la vitesse de réaction, des additifs de fluidification, adaptés pour augmenter les caractéristiques rhéologiques du mélange, ou des tensioactifs, adaptés pour améliorer la mouillabilité en ce qui concerne le lit de poudre.

**5.** Procédé selon la revendication 1, **caractérisé en ce que** le mélange du premier composant solide avec le second composant liquide est maintenu à une température différente de la température ambiante et en particulier à une température inférieure à la température ambiante si le mélange géopolymère est un mélange avec une forte réactivité et avec une température plus élevée par rapport à la température ambiante si le mélange géopolymère est un mélange avec une faible réactivité.

**6.** Procédé selon la revendication 1, **caractérisé en ce que**, pendant l'étape de mélange du premier composant solide avec le second composant liquide, l'agitation du mélange de liant géopolymère contenant le premier composant solide et le second composant liquide est prolongée pour une durée maximale de 30 minutes et dans tous les cas appropriés pour assurer un niveau optimal de géopolymérisation du mélange avant ce dernier est déposé sur le lit de matériau granulaire inerte.

**7.** Procédé selon la revendication 1, **caractérisé en ce qu'**il comprend une étape de dosage d'une première quantité du premier composant solide et une seconde quantité du second composant liquide qui précède l'étape de mélange du premier composant solide avec le second composant liquide, ladite première quantité et ladite seconde quantité étant susceptibles de définir conjointement la quantité de liant nécessaire pour imprégner les zones présélectionnées de la couche correspondante de matériau granulaire inerte.

**8.** Procédé selon la revendication 1, **caractérisé en ce qu'**il comprend également une étape de traitement thermique de l'article manufacturé formé, de manière à mener la formation de phases céramiques dans ce dernier.

# Fig. 1

# Fig. 2

**EP 3 168 203 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT PI20050031
- DE 102014003103 A1
- US 2005049739 A1
- DE 102011105688 A1